Europäisches Patentamt

European Patent Office

Office européen des brevets

(11) Numéro de publication: **0 124 447**
**A2**

## (12) DEMANDE DE BREVET EUROPEEN

(21) Numéro de dépôt: 84400907.6

(22) Date de dépôt: 03.05.84

(51) Int. Cl.³: **F 16 G 11/00**

(30) Priorité: 03.05.83 FR 8307357

(43) Date de publication de la demande: 07.11.84
Bulletin 84/45

(84) Etats contractants désignés: **AT BE CH DE GB IT LI NL SE**

(71) Demandeur: **FREYSSINET INTERNATIONAL (STUP),**
**66 route de la Reine, F-92100 Boulogne Billancourt (FR)**

(72) Inventeur: **Jartoux, Pierre, Rue des Marmouzets**
**Droue-sur-Drouette, F-28230 Epernon (FR)**

(74) Mandataire: **Behaghel, Pierre et al, CABINET**
**PLASSERAUD 84 rue d'Amsterdam, F-75009 Paris (FR)**

(54) Perfectionnements aux éléments de répartition interposés entre les frettes et les corps frettés par celles-ci.

(57) Pour répartir la pression exercée par un câble de frettage (2), notamment contenu dans une gaine (10) avec remplissage de graisse, sur un corps tubulaire (1), tel qu'une conduite forcée ou qu'un silo en béton, ceinturé par ce câble, on interpose entre ledit câble et ledit corps des patins (3) constitués par des tronçons d'un profilé plein en caoutchouc qui présentent la forme générale d'un C à ouverture étranglée définissant un logement cylindrique (4) propre à recevoir jointivement le câble et qui sont délimités, du côté opposé à l'ouverture du C, par une face d'appui rectangulaire plane (6).

1

<u>Perfectionnements aux éléments de répartition interposés
entre les frettes et les corps frettés par celles-ci.</u>

L'invention concerne les éléments de répartition de pression interposés entre les frettes et les corps ceinturés et renforcés par ces frettes.

Elle concerne plus particulièrement le cas où les frettes en question sont constituées par des câbles métalliques mis sous tension, de préférence contenus avec de la graisse dans des gaines en matière plastique.

Il est connu d'accroître par frettage à l'aide de câbles la résistance à l'éclatement de certains corps tubulaires destinés à être soumis à des pressions internes élevées, tels que les conduites forcées en béton ou autre matériau (métal...) destinées à transporter des fluides (eau alimentant les centrales hydrauliques en montagne, gaz industriels...) ou que les réservoirs ou silos cylindriques destinés à stocker des produits liquides ou pulvérulents.

Les câbles ou frettes considérés sont généralement placés directement contre la surface extérieure des corps à renforcer.

Cette solution présente l'inconvénient suivant : la surface d'application des câbles sur le corps est extrêmement petite de sorte que la pression d'application du frettage est très élevée.

A moins que le corps fretté ne soit spécialement dur et résistant au cisaillement et au poinçonnement, ces pressions élevées d'application peuvent créer des lignes de fragilisation dans ledit corps.

En outre, lorsque les câbles sont gainés, leurs gaines

2

risquent d'être perforées ou déchirées au niveau de certaines de leurs plages de contact avec le corps fretté du fait non seulement des pressions élevées concentrées en ces plages, lesquelles plages sont souvent limitées à des zones quasiment linéaires, voire ponctuelles, mais aussi des éventuels déplacements mutuels observés au niveau de ces plages entre les frettes et les corps frettés, notamment lors de la mise sous tension de ces frettes.

Pour écarter cet inconvénient, il a déjà été proposé d'interposer des bandes ou coussins entre les frettes et les corps à fretter. Mais la mise et le maintien en place de ces coussins posent des problèmes délicats.

On a proposé aussi, dans le même but, d'enfiler des perles sur les câbles avant leur mise en place autour des corps à fretter. La mise en place des câbles ainsi garnis est certes simplifiée, mais l'enfilement des perles sur ces câbles est une manoeuvre longue et délicate et cette solution est relativement onéreuse et peu efficace vu que seule une petite portion des perles contribue véritablement à la répartition des pressions de frettage.

L'invention a pour objet, surtout, de remédier à ces divers inconvénients.

A cet effet les éléments de répartition de pression selon l'invention sont essentiellement caractérisés en ce qu'ils sont constitués par des tronçons d'un profilé plein en matériau élastique présentant en section transversale la forme générale d'un C symétrique épais à ouverture étranglée, la face intérieure de ce C s'étendant selon un cercle de diamètre égal à celui des câbles à recevoir, et l'écartement mutuel des deux lèvres du C étant légèrement inférieur à ce diamètre.

Dans des modes de réalisation préférés, on a recours en outre à l'une et/ou à l'autre des dispositions suivantes :

- la portion, de la face extérieure du profilé, opposée à l'ouverture du C, est délimitée par un plan perpendiculaire

3

au plan de symétrie de ce C,

- la face plane selon l'alinéa précédent est raccordée à deux autres faces planes sensiblement perpendiculaires à la première,

- chacune des deux autres faces planes selon l'alinéa précédent est raccordée à une lèvre par une autre face plane inclinée sur celle-ci d'un angle compris entre 30 et 60°, de préférence de l'ordre de 45°,

- chaque lèvre est délimitée par une surface arrondie présentant en section droite la forme d'un demi-cercle,

- l'élément de répartition est constitué en un néoprène dont la dureté shore est de l'ordre de 95 à 100,

- l'élément de répartition est formé par découpe d'un profilé réalisé par extrusion.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1 montre en vue perspective latérale un tronçon de conduite forcée fretté selon l'invention.

La figure 2 montre à plus grande échelle en vue en bout l'un des patins de répartition de pression conformes à l'invention interposés entre la conduite forcée ci-dessus et l'une de ses frettes, ledit patin étant garni d'un câble gainé constituant ladite frette.

La figure 3 montre ce même patin en coupe selon III-III, figure 2.

La conduite 1 que l'on désire fretter selon l'invention est par exemple une conduite forcée en béton armé destinée à transporter un courant d'eau en montagne, en vue notamment d'alimenter une turbine de centrale hydraulique ou d'établir une liaison entre la retenue d'un barrage et une réserve de niveau plus élevé.

00124447

4

Pour renforcer la résistance d'une telle conduite à l'éclatement sous l'effet des pressions internes élevées engendrées par l'eau qu'elle contient et/ou transporte, il est usuel de la ceinturer par des frettes ou câbles 2 enroulés en anneau autour d'elle et mis sous tension.

Pour assurer une bonne répartition des efforts de pression centripète exercés par ces frettes 2 sur la face extérieure de la conduite 1, selon l'invention, on interpose entre lesdites frettes et ladite face des patins massifs 3 présentant chacun deux ailes propres à chevaucher élastiquement les frettes en question.

Ces patins 3 se présentent sous la forme de tronçons d'un profilé plein en caoutchouc ou matériau analogue dont la section transversale s'étend selon un C épais à ouverture étranglée admettant un plan de symétrie P.

Le logement ouvert latéralement qui est défini par ce C présente une face interne cylindrique de révolution dont le diamètre D est égal ou légèrement inférieur au diamètre extérieur des câbles 2 qu'il est destiné à recevoir jointivement.

L'écartement mutuel E des deux lèvres 5 délimitant l'ouverture étranglée du patin est inférieur au diamètre D, le rapport E/D étant avantageusement compris entre 1/4 et 1/2, et de préférence de l'ordre de 1/3.

De la sorte, le montage de chaque patin sur un câble fait intervenir un léger écartement de ses lèvres suivi immédiatement d'un rapprochement élastique de celles-ci autour du câble, à la façon d'un "déclic", dès dépassement du "point dur" correspondant au passage de la zone la plus épaisse du câble entre ces lèvres.

Cette disposition présente le triple avantage :

- d'une grande simplicité de montage,

- d'un positionnement automatique optimal du câble au fond de son logement à la fin de ce montage,

- et d'une certaine irréversibilité dudit montage en ce sens que chaque patin ne peut être séparé du câble sur lequel il est monté sans une intervention extérieure volontaire.

5

La face 6, du patin 3, opposée à l'ouverture du logement 4, face destinée à prendre appui directement contre le corps à fretter, est plane et perpendiculaire au plan P.

Cette face est séparée du fond du logement 4 par une relativement grande épaisseur F du caoutchouc ou autre matériau constitutif du patin.

Ladite face 6 est raccordée à angle droit à deux autres faces planes 7 s'étendant à partir de cette face 6 sur une hauteur H légèrement inférieure à la distance entre ladite face 6 et l'axe du logement 4.

La largeur L de la face 6 est choisie de façon telle que la masse de caoutchouc ou matériau analogue comprise entre le logement 4 et chacune des faces 7 présente une épaisseur relativement grande et comparable à l'épaisseur F ci-dessus.

Chaque face 7 est elle-même raccordée à une lèvre 5 par une face plane 8 inclinée d'un angle compris entre 30 et 60°, par exemple d'environ 45°, sur ladite face 7.

La surface extérieure de chaque lèvre 5 est arrondie, sa section transversale étant de préférence délimitée extérieurement par un demi-cercle.

La longueur M du patin 3 selon la direction longitudinale du profilé, c'est-à-dire la direction de l'axe du logement 4 ou celle des différentes arêtes comprises entre les faces planes adjacentes 6, 7 et 8, est de préférence du même ordre de grandeur que la largeur L.

Mais cette longueur M pourrait être beaucoup plus grande et l'on pourrait même envisager que les patins forment une sorte de fourrure presque continue s'étendant le long d'au moins la plus grande partie des frettes.

En définitive, le patin se présente sous la forme générale d'un bloc prismatique ayant l'allure d'une maisonnette dont l'arête faîtière serait remplacée par une gorge cylindrique relativement profonde et large d'axe horizontal.

Le matériau constitutif du patin doit être suffisamment déformable pour que sa face rectangulaire 6,qui consti-

6

tue la face d'appui du patin contre la face cylindrique externe du corps 1, vienne épouser jointivement cette face cylindrique, et suffisamment dur pour éviter tout cisaillement par le câble.

Ce matériau est par exemple le caoutchouc synthétique connu sous le nom de néoprène et présentant une dureté shore de l'ordre de 95 à 100.

Mais tout autre matériau élastomère ou plastique présentant les qualités requises de déformabilité, d'élasticité et de résistance pourrait être envisagé.

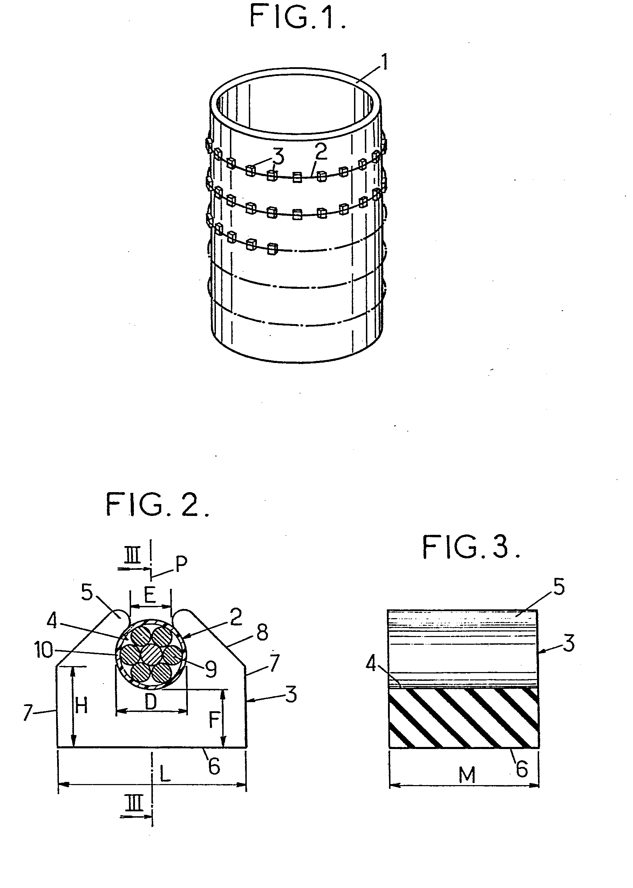

Dans les applications préférées, les câbles 2 constituant les frettes sont formés par des fils ou torons 9 (fig. 2) contenus dans des gaines 10 en matière plastique avec interposition d'un remplissage de graisse.

Une telle formule permet de protéger lesdits fils ou torons vis-à-vis de l'humidité, ce qui importe spécialement dans le cas mentionné ci-dessus du frettage d'une conduite forcée en montagne, conduite dont la face externe est sujette aux ruissellements.

L'adoption des patins de répartition selon l'invention est particulièrement intéressante lorsque le frettage est assuré à l'aide de tels câbles gainés vu qu'elle permet d'écarter les risques de déchirure locale des gaines dus aux concentrations locales de la pression de frettage.

Dans un mode de réalisation de l'invention ayant donné toute satisfaction et indiqué à titre purement illustratif, le diamètre du câble de frettage 2 étant de 18 mm, les cotes suivantes ont été adoptées pour les patins : $D = 18$ mm, $E = 12$ mm, $F = 14$ mm, $H = 21$ mm, $L = 50$ mm et $M = 40$ mm.

L'écartement moyen entre les différents patins le long de chaque frette était alors de l'ordre de 15 à 20 cm et l'écartement mutuel des différentes frettes était de l'ordre de 10 cm.

Mais bien entendu toutes autres dimensions et répartitions des patins pourraient également être envisagées, en fonction des pressions internes des ouvrages à renforcer, lesdits patins étant par exemple répartis selon des mailles carrées et présentant alors des écartements identiques aussi bien selon la direction longitudinale de la conduite 1 que selon sa direction périphérique.

Pour fabriquer les patins ci-dessus, on procède avantageusement par tronçonnage d'un profilé réalisé par extrusion à travers une filière appropriée.

Mais on pourrait également adopter tous autres procédés désirables, tels qu'un moulage.

En suite de quoi, et quel que soit le mode de réalisation adopté, on dispose finalement de patins de frettage dont la constitution résulte suffisamment de ce qui précède.

Ces patins présentent de nombreux avantages par rapport à ceux antérieurement connus et en particulier les suivants :

- le montage de chaque patin sur le câble correspondant peut être assuré d'une manière très simple par chevauchement latéral de ce câble par ce patin avec écartement élastique momentané des lèvres du patin pour permettre le passage du câble et fermeture subséquente automatique et immédiate de ces lèvres autour du câble mis en place,

- cette fermeture automatique parachève excellemment la mise en place du câble au fond du logement du patin,

- elle confère en outre au montage obtenu un caractère sinon totalement irréversible, du moins du type "imperdable", c'est-à-dire pour lequel les patins ne peuvent plus être "perdus" ou séparés involontairement des câbles qu'ils équipent,

- la mise en place des câbles ainsi équipés préalablement de leurs patins autour du corps à fretter est ensuite extrêmement facile puisqu'il suffit d'orienter leurs faces d'appui 6 vers ledit corps,

- grâce à la déformabilité du matériau constitutif de chaque patin, à sa dureté et à la grande superficie de sa face rectangulaire d'appui 6, cette dernière s'applique exactement sur la face extérieure du corps 1 à fretter, lors

00124447

8

de la mise en place de la frette sur ce corps et de sa mise sous tension, ce qui réduit considérablement la pression spécifique du frettage pour une efficacité donnée de celui-ci et assure une répartition excellente et durable de cette pression de frettage.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où la face intérieure du C définissant la forme générale de la section transversale du tronçon de profilé ne serait pas rigoureusement circulaire, tout au moins avant la mise en place de ce tronçon de profilé sur le câble correspondant, ladite section pouvant notamment être choisie de façon à susciter automatiquement une fermeture élastique du C après ladite mise en place.

9

## REVENDICATIONS

1. Elément de répartition de pression interposé entre un câble de frettage (2) et un corps (1) ceinturé par ce câble, caractérisé en ce qu'il est constitué par un tronçon de profilé plein en matériau élastique présentant en section transversale la forme générale d'un C symétrique épais à ouverture étranglée, la face intérieure (4) de ce C s'étendant selon un cercle de diamètre (D) égal à celui des câbles à recevoir, et l'écartement mutuel des deux lèvres (5) du C étant légèrement inférieur à ce diamètre.

2. Elément de répartition selon la revendication 1, caractérisé en ce que la portion, de la face extérieure du profilé, opposée à l'ouverture du C, est délimitée par un plan (6) perpendiculaire au plan de symétrie (P) de ce C.

3. Elément de répartition selon la revendication 2 , caractérisé en ce que la face plane (6) est raccordée à deux autres faces planes (7) sensiblement perpendiculaires à la première.

4. Elément de répartition selon la revendication 3, caractérisé en ce que chacune des deux autres faces planes (7) est raccordée à une lèvre (5) par une autre face plane (8) inclinée sur celle-ci d'un angle compris entre 30 et 60°, de préférence de l'ordre de 45°.

5. Elément de répartition selon l'une quelconque des précédentes revendications, caractérisé en ce que chaque lèvre (5) est délimitée par une surface arrondie présentant en section droite la forme d'un demi-cercle.

6. Elément de répartition selon l'une quelconque des précédentes revendications, caractérisé en ce qu'il est constitué en un néoprène dont la dureté shore est de l'ordre de 95 à 100.

7. Elément de répartition selon l'une quelconque des précédentes revendications, caractérisé en ce qu'il est formé par découpe d'un profilé réalisé par extrusion.

1

# FIG.1.

# FIG. 2.

# FIG.3.